# FASCICULE DE BREVET EUROPEEN

(11) **EP 1 725 391 B1**
(45) Date de publication et mention de la délivrance du brevet: **02.09.2015**
(21) Numéro de dépôt: 05736516.5
(22) Date de dépôt: 09.03.2005
(51) Int. Cl.: B29C 51/04, B29C 51/30, B29C 51/40, B29C 51/16, B29K 105/00

(54) **DISPOSITIF ET PROCÉDÉ POUR LE THERMOFORMAGE D'UN OBJET PRÉSENTANT UN CORPS ET UN REBORD TOMBANT**
VORRICHTUNG UND VERFAHREN ZUM THERMOFORMEN EINES EINEN KÖRPER UND EINEN NACH UNTEN GEDREHTEN RAND UMFASSENDEN OBJEKTS
DEVICE AND METHOD FOR THE THERMOFORMING OF AN OBJECT COMPRISING A BODY AND A DOWNTURNED RIM

(30) Priorité: 10.03.2004 FR 0402489
(43) Date de publication de la demande: 29.11.2006
(73) Titulaire: ERCA, 91940 Les Ulis (FR)
(72) Inventeur: SCHWAB, Dominique, F-78000 VERSAILLES (FR)
(74) Mandataire: Intès, Didier Gérard André
(86) Numéro de dépôt international: PCT/FR2005/000557
(87) Numéro de publication internationale: WO 2005/087478

(56) Documents cités:
- EP-A- 0 974 263
- EP-A- 1 083 040
- US-A- 3 121 916

## Description

La présente invention concerne un dispositif pour le thermoformage d'un objet présentant un corps et un rebord tombant formant jupe, selon le préambule de la revendication 1.

On connaît déjà des dispositifs pour fabriquer par thermoformage des objets tels que des récipients, ayant un corps sensiblement cylindrique et un rebord sensiblement perpendiculaire à la direction de la profondeur de ce corps. Ces récipients sont souvent destinés à contenir des produits alimentaires tels que des produits laitiers, des compotes de fruits...

On connaît également des récipients ayant un corps et un rebord tombant formant jupe, autour du bord supérieur de ce corps. Ce récipient a ainsi globalement la forme d'un seau et, par exemple, le rebord formant jupe peut servir d'ancrage à une anse pour le seau. Actuellement, de tels récipients ayant un rebord tombant sont fabriqués par injection ou soufflage, ce qui limite les cadences de fabrication. Leur prix de revient s'en trouve donc affecté. De plus, il n'est pas possible de réaliser en ligne les opérations postérieures à la fabrication proprement dite telles que, par exemple, le remplissage de ces récipients.

Les documents EP 1 083 040, EP 0 974 263 qui représente le préambule des revendications 1 et 15 et US 3,121,916 montrent le thermoformage de pots ayant un rebord tombant, à partir d'une feuille de matériau thermoplastique. Dans ces documents, le bord du contre-moule ou celui d'une pièce de découpe solidaire du déplacement du contre-moule vient rabattre le matériau thermoplastique contre l'extrémité supérieure de la chambre de thermoformage lors de la descente du contre-moule vers le moule.

Le rabat du matériau n'est donc pas maîtrisé puisqu'il dépend uniquement de la course de déplacement du contre-moule. Cette technologie n'est applicable qu'à la fabrication de pots tels que des pots pour plantes, dont la paroi est relativement épaisse et pour lesquels des défauts d'aspect sont tolérés.

La présente invention a pour but de proposer un dispositif de thermoformage pour un objet ayant un corps et un rebord tombant formant jupe permettant ainsi de bénéficier, pour un tel objet de forme particulière, des avantages du thermoformage, notamment en matière de cadence de fabrication et de prix de revient, tout en évitant ou au moins en limitant les défauts d'aspect du rebord tombant.

Ce but est atteint grâce aux caractéristiques de la revendication 1.

La pièce thermoplastique dans laquelle est formé l'objet peut être une feuille continue de matériau thermoplastique ou une plaquette de matériau thermoplastique dans laquelle est fabriqué un tel objet ou un groupe de tels objets. Cette pièce est maintenue entre le moule et le contre-moule et l'espace annulaire précité est astucieusement ménagé de telle sorte que l'outil de rabat puisse repousser dans cet espace une partie de la pièce thermoplastique qui sert à réaliser le rebord tombant. Le déplacement de l'outil de rabat est maîtrisé grâce aux moyens de déplacement spécifiques, qui sont actionnés distinctement des moyens de déplacement du contre-moule et de ceux du piston de thermoformage.

De préférence dans le dispositif de l'invention, le déplacement de l'outil de rabat est commandé de telle sorte que cet outil se déplace dans le sens de sa pénétration dans l'espace annulaire pendant le déplacement du piston de thermoformage dans le sens de sa pénétration dans la chambre de thermoformage.

Ensuite, l'objet peut être découpé du reste de la pièce thermoplastique dans la région qui a été repoussée par l'outil de rabat, et les dimensions souhaitées peuvent être données au rebord tombant.

Avantageusement, l'extrémité de la chambre de thermoformage présente un bord formant une lèvre intérieure en regard de laquelle se trouve une lèvre intérieure du contre-moule, lesdites lèvres intérieures étant aptes à pincer la pièce thermoplastique entre elles.

Grâce à ces dispositions, la pièce thermoplastique est pincée entre les lèvres intérieures précitées et le corps de l'objet est donc réalisé de manière classique dans la région de la pièce qui est entourée par ces lèvres intérieures, le rebord tombant étant quant à lui formé par la partie de la pièce qui est repoussée par l'outil de rabat et qui se trouve autour de ces lèvres intérieures.

Avantageusement l'espace annulaire est délimité par une lèvre extérieure en regard de laquelle se trouve une lèvre extérieure du contre-moule, lesdites lèvres extérieures étant aptes à pincer la pièce thermoplastique entre elles.

Dans ce cas, le corps de l'objet et le rebord tombant sont formés dans une région de la pièce qui est entourée par ces lèvres extérieures. De plus, le bord supérieur de la lèvre extérieure du moule peut, pour le thermoformage, être situé dans le plan de la bande, de sorte que la formation du rabat ne gêne pas l'entraînement de cette bande puisque l'extrémité supérieure des récipients reste dans le plan de la bande. Le matériau thermoplastique est déformé avec une section en U entre les lèvres du moule, et la découpe des récipients s'effectuera ensuite à la base du U, contre l'aile intérieure de ce dernier qui formera le rebord tombant.

Avantageusement, les lèvres intérieures et les lèvres extérieures précitées sont présentes, auquel cas la partie de la pièce qui est rabattue dans l'espace annulaire par l'outil de rabat est déformée par étirement par cet outil, dans la mesure où elle est maintenue à la fois par les lèvres intérieures et par les lèvres extérieures.

Avantageusement, pour former le rebord tombant, le moule et le contre-moule sont rapprochés l'un de l'autre, de part et d'autre de la pièce thermoplastique, de manière à au moins sensiblement fermer ledit espace annulaire en constituant une chambre annulaire, et le dispositif comporte des moyens pour injecter du gaz dans ladite chambre annulaire.

Ces moyens comprennent avantageusement une communication entre la chambre de thermoformage et la chambre annulaire et des moyens pour injecter du gaz dans la chambre de thermoformage.

Le gaz qui est injecté est par exemple de l'air. On sait que l'injection d'un tel gaz pendant le thermoformage permet de plaquer la pièce thermoformée contre la paroi du moule de thermoformage. En l'espèce, la paroi contre laquelle est ainsi plaquée la partie de la pièce thermoplastique dans laquelle est formé le rebord tombant est une paroi de la chambre annulaire précitée, située à l'extrémité de la chambre de thermoformage, à l'extérieur de cette dernière.

Grâce à la communication précitée entre la chambre de thermoformage et la chambre annulaire, les moyens classiques d'injection de gaz dans la chambre de thermoformage permettent également d'injecter le gaz dans la chambre annulaire. Cette communication comprend par exemple un ou plusieurs perçages formés dans la paroi de la chambre de thermoformage, à l'extrémité de cette dernière, et débouchant dans l'espace annulaire.

Avantageusement, le dispositif comporte des moyens pour disposer une banderole de décor dans la chambre de thermoformage avant le thermoformage du corps de l'objet.

Une telle banderole de décor peut être découpée et disposée dans la chambre de thermoformage par tous moyens appropriés. Il peut s'agir de moyens d'introduction de la banderole par le fond de la chambre de thermoformage, par exemple connus par les documents FR 2 793 185 et FR 2 839 465, ou encore de moyens utilisant un bloc d'introduction basculant connus par le document EP 1 140 467 ou tels que ceux qui font l'objet de la demande de brevet français n° 2 858 263.

L'invention concerne également un procédé de thermoformage d'un objet présentant un corps et un rebord tombant formant jupe, selon le préambule de la revendication 15.

L'invention vise à proposer un procédé pour thermoformer un objet du type précité, ayant un rebord tombant formant jupe, en remédiant aux inconvénients de l'art antérieur décrit précédemment.

Ce but est atteint grâce aux caractéristiques de la revendication 15.

Avantageusement, pour former le rebord tombant, on ferme au moins sensiblement ledit espace annulaire en constituant une chambre annulaire, dans laquelle on injecte du gaz.

Avantageusement, on injecte du gaz dans l'espace annulaire par une communication entre la chambre de thermoformage et la chambre annulaire.

Selon l'invention, on déplace l'outil de rabat pendant le déplacement du piston de thermoformage dans le sens de la pénétration de ce piston dans la chambre de thermoformage.

Ainsi, la formation du rebord tombant est réalisée en temps masqué par rapport au thermoformage du corps du récipient. De plus, les efforts d'étirement sont bien équilibrés sur les parties de la pièce thermoplastique situées de part et d'autre du bord supérieur de cette pièce, dans lesquelles sont respectivement formés la partie supérieure du corps de l'objet et le rebord tombant.

Avantageusement, on dispose une banderole de décor dans la chambre de thermoformage avant le thermoformage du corps de l'objet.

Cette banderole peut être disposée dans la chambre de thermoformage par tout procédé approprié, par exemple comme décrit dans les documents précités. Avantageusement, on dispose la banderole dans la chambre de thermoformage de telle sorte que le bord de cette banderole qui est tourné du côté de l'extrémité de la chambre de thermoformage par laquelle le piston de thermoformage est introduit dans cette chambre puisse être masqué par le rebord tombant formant jupe lorsque le récipient est fabriqué. Il convient pour cela, en tenant compte de la hauteur de ce rebord formant jupe, laquelle dépend de la hauteur de l'espace annulaire dans lequel l'outil de rabat se déplace, de disposer le rebord de la banderole suffisamment près de l'extrémité de la chambre de thermoformage.

Avantageusement, on forme sur le rebord tombant un relief qui est avantageusement annulaire.

Ce relief peut avoir un effet esthétique. Il peut par ailleurs servir de relief de clipsage pour assurer la fermeture de l'objet par un couvercle clipsé sur ce rebord.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique d'une installation utilisant un dispositif de thermoformage conforme à l'invention ;
- la figure 2 est une vue extérieure en perspective d'un tel dispositif ;
- la figure 3 est une vue de dessus du dispositif de la figure 2 ;
- les figures 4 à 6 sont des vues en coupe, selon la ligne IV-IV de la figure 3, montrant trois états successifs du dispositif de thermoformage au cours du thermoformage d'un objet ;
- la figure 7 est une vue extérieure, avec un arrachement partiel, d'un objet fabriqué par thermoformage dans un tel dispositif ; et
- les figures 8 et 9 sont des vues schématiques en perspective d'un outil de rabat utilisé dans le dispositif de thermoformage de l'invention, selon deux variantes.

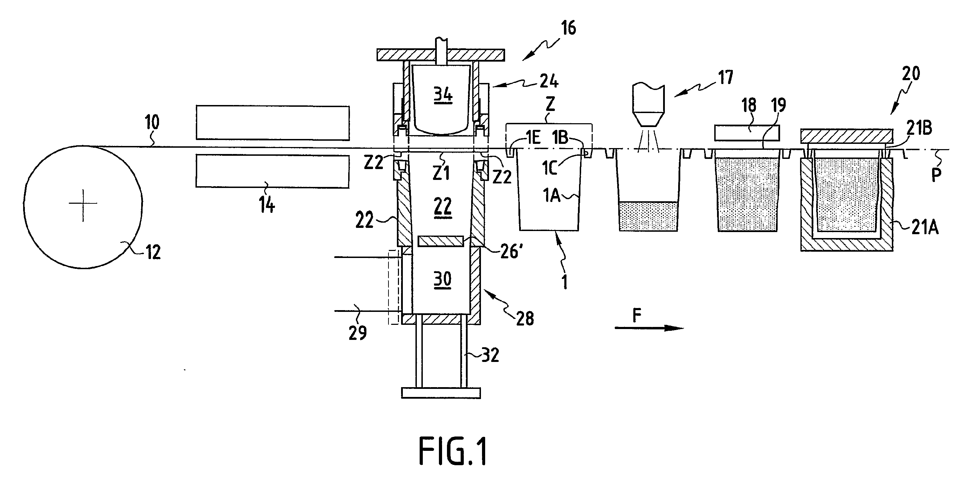

L'installation de la figure 1 sert à thermoformer des récipients 1 à partir d'une bande thermoplastique 10, à remplir ces récipients avec un produit, par exemple un produit alimentaire à fermer ces récipients à l'aide d'un couvercle ou d'un opercule et à découper ces récipients par rapport à la bande.

La bande 10, initialement portée par une bobine 12, est entraînée pas à pas à travers les différentes stations de l'installation.

Dans le sens F d'avancement de la bande, l'installation comporte successivement une boîte de chauffe 14 qui sert à porter à la température de thermoformage au moins les régions de la bande 10 dans lesquelles les récipients doivent être formés, une station de thermoformage 16, dans laquelle les récipients sont thermoformés, une station 17 de dosage et de remplissage des récipients, une station 18 de fermeture de ces récipients et une station 20 de découpe des récipients. Bien entendu, il ne s'agit que d'un exemple de représentation, les récipients pouvant parfaitement être découpés par rapport à la bande 10 avant d'être remplis, ceci éventuellement en reprise dans une autre installation.

Dans l'exemple représenté, la station de thermoformage 16 comprend non seulement un moule de thermoformage 22 et un contre-moule 24, mais encore des moyens de banderolage 28 qui servent à disposer une banderole dans la chambre de thermoformage 26. De manière connue en soi, cette banderole est par exemple formée par la partie d'extrémité avant d'une bandelette 29, enroulée dans une chambre de banderolage 30 et transférée dans la chambre de thermoformage 26 à travers une fente 26' du fond de cette chambre, par des moyens de transfert tels que des doigts 32.

Les récipients 1 sont formés dans des zones Z de la bande thermoplastique 10. Comme on le voit en aval de la station de thermoformage 16 dans le sens F de la figure 1, chaque zone Z de la bande qui est déformée pour former un récipient comprend, pour chaque récipient, le corps 1A, le bord supérieur 1B, un rebord tombant 1C, et une déformation marginale 1E, ramenant la bande dans son plan initial P à partir de l'extrémité du rebord tombant 1C opposée au rebord 1B. Ainsi, chaque zone Z comprend une zone centrale Z1 dans laquelle est formé le corps du récipient et une zone annulaire périphérique Z2, dans laquelle sont formées les portions 1B, 1C et 1E précitées.

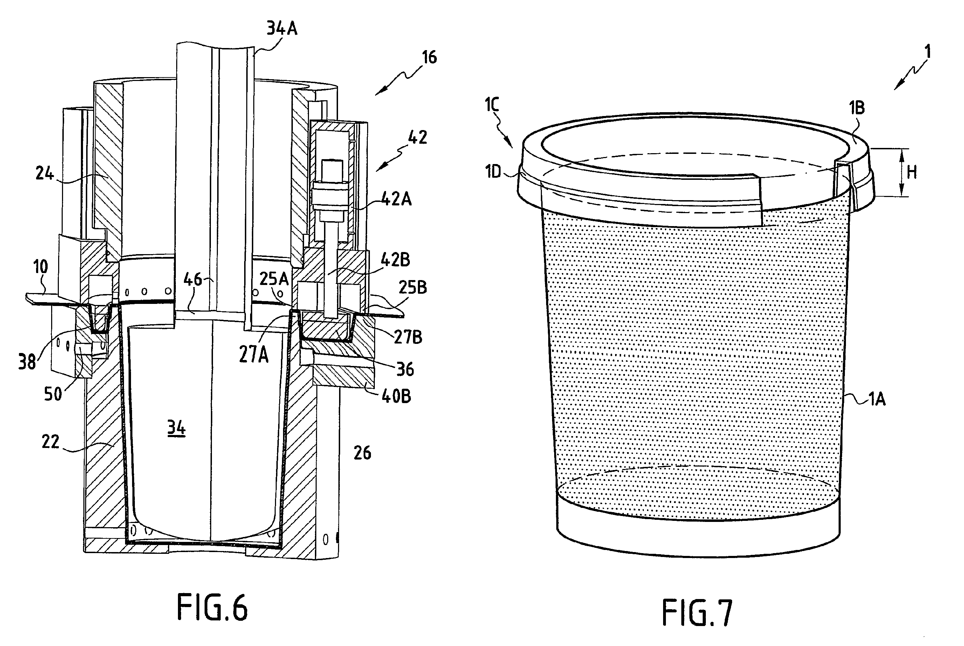

On comprend qu'après la découpe du récipient, celui-ci est simplement formé par son corps 1A, son corps supérieur 1B et son rebord tombant 1C, comme on le voit sur la figure 7. Toutefois, la largeur des zones marginales Z2 est avantageusement déterminée pour, en tenant compte de la hauteur H du rebord 1C, étirer une zone suffisante de la bande pour former ce rebord, tout en conférant à ce dernier la résistance mécanique souhaitée, cette résistance mécanique étant en particulier conditionnée par l'épaisseur de la bande dans la région de ce rebord, qui est elle-même fonction de la hauteur H d'étirement par rapport à la surface de la zone Z2.

De manière connue en soi, le contre-moule 24 de thermoformage comprend au moins un piston de thermoformage 34 qui pénètre dans la chambre 26 pour déformer la bande et thermoformer ainsi le corps du récipient.

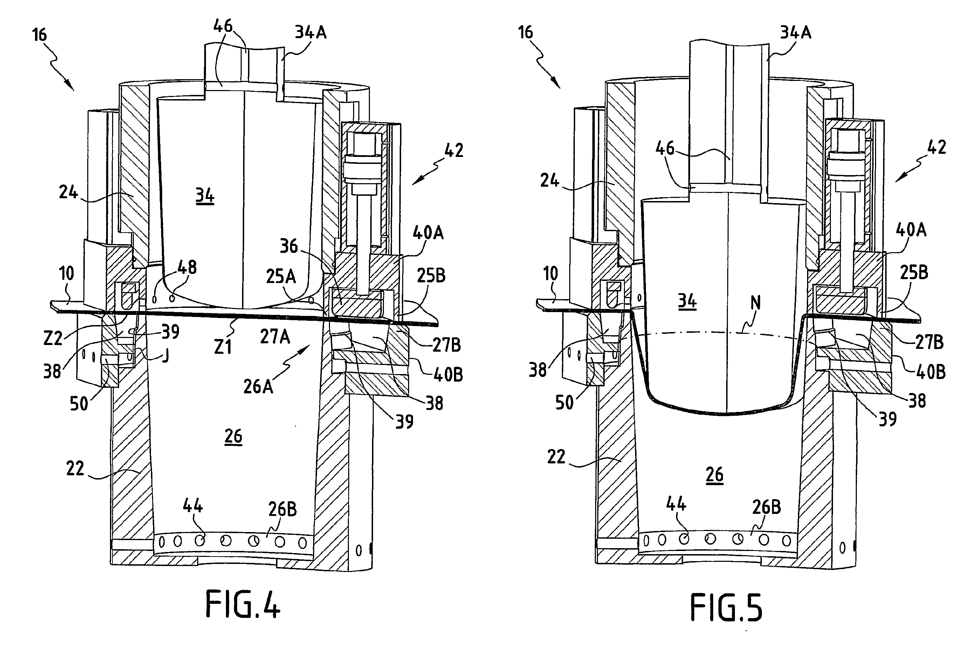

Comme on le voit mieux sur les figures 4 à 6, le dispositif de thermoformage de l'invention comporte, pour former le rebord tombant 1C, un outil de rabat 36 qui est apte à pénétrer dans un espace annulaire 38 ménagé autour de l'extrémité supérieure 26A de la chambre de thermoformage 26. Pour simplifier, on considèrera dans la suite que le piston de thermoformage 34 pénètre dans la chambre 26 par son extrémité supérieure 26A.

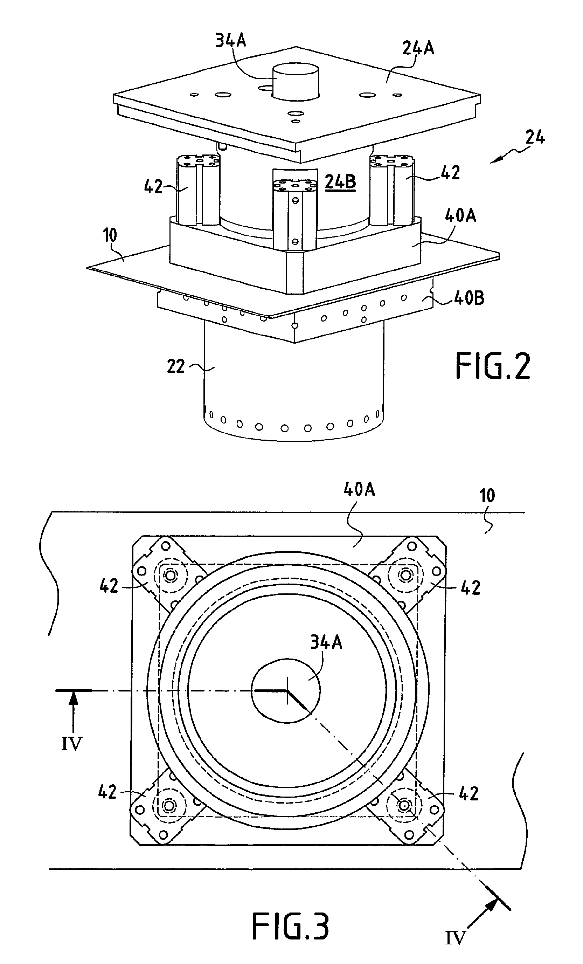

Sur la figure 2, on a représenté le dispositif de thermoformage en perspective, avec son moule 22 et son contre-moule 24, la tige 34A du piston 34 dépassant de la plaque de support 24A, et l'extrémité inférieure de la paroi 24B du contre-moule étant entourée par un contre-moule de bord 40A pour l'outil de rabat, tandis que l'extrémité supérieure de la chambre de thermoformage est entourée par un moule de bord 40B à l'intérieur duquel est délimité l'espace annulaire 38. Dans l'exemple représenté, le moule et le contre-moule de bord ont un contour dont la section horizontale est sensiblement carrée et, aux quatre coins du carré ainsi formé par le contour du contre-moule de bord 40A, sont disposés des moyens de commande du déplacement de l'outil de rabat formés par des vérins 42, dont on voit mieux la disposition sur la figure 3, sur laquelle la plaque de support 24A du contre-moule n'est pas représentée.

Comme on le voit mieux sur les figures 4 à 6, l'extrémité 26A de la chambre de thermoformage présente un bord formant une lèvre intérieure 27A en regard de laquelle se trouve une lèvre intérieure 25A du contre-moule. Du côté opposé à la chambre de thermoformage, l'espace annulaire 38 est délimité par une lèvre extérieure 27B en regard de laquelle se trouve une lèvre extérieure 25B du contre-moule 24. Ces lèvres extérieures 27B et 25B sont formées, respectivement, par les bords extérieurs du moule de bord 40B et du contre-moule de bord 40A précédemment évoqués.

Comme on le voit sur la figure 4, avant le thermoformage d'un récipient dans la bande 10, le moule et le contre-moule sont rapprochés l'un de l'autre de telle sorte que la bande thermoplastique est pincée, entre les lèvres 27A et 25A, selon une première zone annulaire située à la frontière des zones Z1 et Z2 précédemment évoquées et, entre les lèvres 27B et 25B, selon une deuxième zone annulaire délimitant la zone Z2 à l'opposé de la zone Z1.

Dans l'exemple représenté, la première zone annulaire est circulaire, tandis que la deuxième zone annulaire a sensiblement la forme d'un carré.

La zone Z2 de la bande délimitée entre ces deux zones de pincement est celle qui est déformée par le déplacement de l'outil de rabat 36 pour réaliser le rebord tombant.

Dans l'exemple représenté, comme on le voit sur les figures 4 à 6, le moule et le contre-moule sont rapprochés l'un de l'autre de part et d'autre de la pièce 10 pour sensiblement fermer l'espace annulaire 38 dans lequel est donc emprisonnée la zone Z2 de la bande.

Sur la figure 4, le piston 34 et l'outil de rabat 36 sont dans leurs positions de retrait respectives, respectivement à l'intérieur du contremoule 24 et à l'intérieur du contre-moule de bord 40A, positions dans lesquelles ils ne coopèrent pas avec la pièce thermoplastique 10.

Sur la figure 5, le piston 34 a commencé sa course de pénétration à l'intérieur de la chambre de thermoformage 26 et déforme la zone Z1 de la bande 10. La partie de fond 26B de la chambre 26 est pourvue d'orifices 44 pour permettre l'évacuation de l'air contenu dans la chambre 26, entre cette partie de fond et la pièce 10.

Sur la figure 5, l'outil de rabat 36 est toujours dans sa position de retrait à l'intérieur du contre-moule de bord 40A. Sur la figure 6, on voit que le piston 34 et l'outil de rabat 36 sont tous deux parvenus en fin de leurs courses de déplacement, le piston 34 étant à l'intérieur de la chambre 26 et l'outil de rabat 36 étant à l'intérieur de l'espace annulaire 38.

La partie de la pièce thermoplastique 10 qui est déformée est plaquée contre les parois de la chambre 26 et de l'espace annulaire 38. Pour plaquer la partie de la pièce 10 dans laquelle est formé le corps 1A du récipient contre la paroi de la chambre 26, le dispositif de thermoformage comporte de manière connue en soi des moyens pour injecter du gaz dans cette chambre 26. Par exemple, ces moyens peuvent comprendre des canaux d'injection 46 ménagés dans la tige 34A du piston de thermoformage 34. La chambre 26 est ainsi mise en surpression. Pour également mettre l'espace annulaire 28 en surpression, on utilise avantageusement les mêmes moyens d'injection de gaz. A cet effet, le dispositif de thermoformage de l'invention comprend une communication entre la chambre de thermoformage 26 et l'espace annulaire 38 qui, du fait du rapprochement du contre-moule et du moule de bord 40A et 40B, délimite la chambre annulaire précitée. Ainsi, comme on le voit en particulier sur les figures 4 à 6, la partie d'extrémité du contre-moule qui forme la lèvre intérieure 25A précitée est pourvue d'une pluralité d'orifices de communication 48.

Pour évacuer l'air refoulé entre la pièce thermoplastique 10 et le fond de l'espace annulaire 38, celui-ci comprend des perçages d'évacuation 50. Dans l'exemple représenté, il s'agit de perçages transversaux ménagés, sous le fond de l'espace annulaire 38, dans le moule de bord 40B, ces perçages communiquant avec le jeu annulaire J préservé, au fond de l'espace annulaire 38, entre la paroi de la chambre de thermoformage 26 et le moule de bord 40B, cette dernière étant rapportée sur cette chambre et fixée à cette dernière par des moyens de fixation 50.

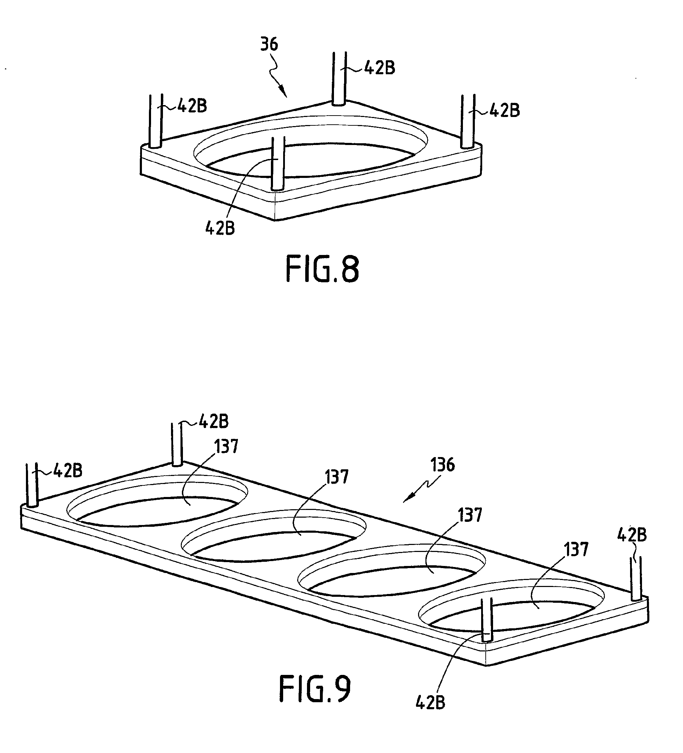

Comme on l'a indiqué précédemment, le déplacement de l'outil de rabat pour former le rebord tombant est avantageusement réalisé en temps masqué par rapport au déplacement du piston de thermoformage 24 pour former le corps du récipient. Toutefois, dans la mesure où ces deux outils ont généralement des courses différentes, il est avantageux que l'outil de rabat ait des moyens de déplacement spécifiques, différents de ceux qui déplacent le piston 34 par rapport au contre-moule. Ces moyens spécifiques comprennent au moins un vérin 42 (plusieurs dans l'exemple représenté) et, comme on le voit mieux sur les figures 4 à 6, chaque vérin forme un ensemble de déplacement ayant une base 42A qui est fixe par rapport au contre-moule 24 et une partie mobile 42B qui est déplaçable par rapport à cette base. Par exemple, la base fixe 42A est le corps du vérin et la partie mobile 42B est sa tige, dont l'extrémité est fixée à la pièce annulaire 36 qui forme l'outil de rabat. La forme de cette pièce annulaire est visible sur la figure 8, sur laquelle on a également représenté les quatre tiges de vérin 42B fixés aux quatre coins de cette plaque.

Bien que, pour les commodités du dessin, on n'ait représenté qu'une seule chambre de thermoformage 26 et un seul piston 34, il doit être entendu que le dispositif de l'invention peut comprendre une pluralité de chambres de thermoformage et une pluralité de pistons de thermoformage aptes, chacun, à pénétrer dans l'une de ces chambres. Par exemple, le moule de thermoformage 22 comprend une rangée de chambres de thermoformage disposée transversalement par rapport au sens d'avancement F de la bande thermoplastique 10. Avec la variante de la figure 8, le dispositif de thermoformage comprend, pour chacune de ces chambres 26, un outil de rabat 36 formé par une pièce annulaire qui est disposée autour de la chambre qui est considérée.

La figure 9 montre, selon une vue analogue à celle de la figure 8, une plaque de rabat 136, ayant une pluralité d'alvéoles 137. Dans ce cas, pour chaque chambre de thermoformage correspondant à l'une de ces alvéoles 137, l'outil de rabat est formé par une région de la plaque 136 qui borde cette alvéole. L'outil de la figure 9 est par exemple adapté à un dispositif de thermoformage comprenant une rangée de quatre chambres de thermoformage. Il peut être déplacé par quatre vérins dont les tiges 42B sont représentées sur la figure 9, leurs bases fixes étant solidaires du contre-moule.

On voit sur la figure 7 que le rebord tombant 1C formant jupe du récipient 1 fabriqué à l'aide du dispositif de l'invention peut comprendre un relief, avantageusement un relief annulaire. En l'espèce, ce relief est formé par une zone d'épaulement 1D, entre deux parties du rebord formant jupe, de diamètres différents. Pour réaliser un tel relief, l'espace annulaire 38 présente avantageusement, du côté de la chambre de thermoformage 26, une paroi ayant un relief 39, qui est avantageusement annulaire. Cette paroi forme la paroi intérieure de l'espace annulaire 38, située sur la face extérieure de la lèvre 27A. Pour former le rebord tombant, le matériau thermoplastique est plaqué contre cette paroi et épouse donc la forme du relief 39 précité.

Pour simplifier les dessins, on n'a pas représenté sur les coupes des figures 4 à 6, la fente 26' du fond de la chambre de thermoformage à travers laquelle la banderole de décor peut être disposée dans cette chambre. Sur la figure 5, on a indiqué par la référence N, le niveau horizontal du fond de l'espace annulaire 38, niveau que peut atteindre l'extrémité inférieure du rebord formant jupe 1C. De préférence, on choisit la hauteur de la banderole de décor de telle sorte que, une fois que cette banderole est disposée dans la chambre 26, son bord supérieur se trouve au-dessus de ce niveau horizontal N, en le dépassant par exemple de quelques millimètres. De ce fait, une fois le récipient découpé, l'extrémité inférieure du rebord formant jupe peut masquer le bord supérieur de la banderole, améliorant ainsi la finition du récipient.

Sur la figure 1, la station 18 de fermeture des récipients permet de fixer un opercule 19, par exemple formé à partir d'une bande non représentée) sur le bord de chaque récipient. De manière complémentaire ou alternative, on peut poser un couvercle préformé sur chaque récipient, en le solidarisant par clipsage. Ce couvercle peut être mis en place en reprise.

Par ailleurs, on a représenté de manière très schématique la station de découpe des récipients, cette station comprenant un contre-outil 21A et un outil de découpe avec une lame de découpe 21B. On peut par exemple découper les récipients selon un plan horizontal et, en reprise, améliorer si nécessaire la finition de l'extrémité inférieure du rebord tombant pour obtenir la finition souhaitée.

Bien entendu, l'installation et le procédé de l'invention peuvent s'appliquer au thermoformage de récipients dans une bande continue comme représenté, ou bien dans des pièces telles que des jetons, en fabricant un récipient ou un groupe de récipients par jeton.

En particulier pour le thermoformage à partir de jetons, l'outil de rabat et la lèvre intérieure du bord du moule peuvent être réalisés de telle sorte qu'un espace juste apte à loger le rebord rabattu soit ménagé entre une partie en renfoncement de la lèvre et l'outil de rabat lorsque celui-ci est en position active tandis que l'outil de rabat est ajusté à la lèvre au-delà de cet espace pour fermer ce dernier dans sa position active.

## Revendications

1. Dispositif pour le thermoformage d'un objet (1) présentant un corps (1A) et un rebord tombant (1C) formant jupe, le dispositif comprenant une station de thermoformage (16) qui comprend un moule de thermoformage (22) ayant au moins une chambre de thermoformage (26) et un contre-moule (24) ayant au moins un piston de thermoformage (34) apte à pénétrer dans ladite chambre par une extrémité de cette dernière pour thermoformer le corps de l'objet à partir d'une pièce thermoplastique (10) maintenue entre le moule et le contre-moule, le dispositif comportant, pour former le rebord tombant (1C), un outil de rabat (36, 136) apte à pénétrer dans un espace annulaire (38) ménagé autour de ladite extrémité (26A) de la chambre de thermoformage (26) en repoussant une partie (Z2) de la pièce thermoplastique (10) dans ledit espace annulaire,
**caractérisé en ce qu'**il comporte des moyens spécifiques pour déplacer l'outil de rabat (36, 136) par rapport au contre-moule, de telle sorte que ledit outil se déplace dans le sens de sa pénétration dans l'espace annulaire, pendant le déplacement du piston de thermoformage (34) dans le sens de sa pénétration dans la chambre de thermoformage (26).

2. Dispositif selon la revendication 1, **caractérisé en ce que** lesdits moyens spécifiques sont aptes à commencer à déplacer l'outil de rabat (36, 136) dans le sens de sa pénétration dans l'espace annulaire alors que le piston de thermoformage (34) a déjà commencé sa course de pénétration à l'intérieur de la chambre de thermoformage.

3. Dispositif selon la revendication 1 ou 2, **caractérisé en ce que** l'extrémité (26A) de la chambre de thermoformage (26) présente un bord formant une lèvre intérieure (27A) en regard de laquelle se trouve une lèvre intérieure (25A) que présente le contre-moule (24), lesdites lèvres intérieures (25A) étant aptes à pincer la pièce thermoplastique entre elles.

4. Dispositif selon l'une quelconque des revendications 1 à 3, **caractérisé en ce que** l'espace annulaire (38) est délimité par une lèvre extérieure (27B) en regard de laquelle se trouve une lèvre extérieure (25B) que présente le contre-moule (24), lesdites lèvres extérieures étant aptes à pincer la pièce thermoplastique entre elles.

5. Dispositif selon l'une quelconque des revendications 1 à 4, **caractérisé en ce que**, pour former le rebord tombant (1C), le moule (22) et le contre-moule (24) sont aptes à être rapprochés l'un de l'autre, de part et d'autre de la pièce thermoplastique (10), de manière à au moins sensiblement fermer ledit espace annulaire (38) en constituant une chambre annulaire (38) et **en ce qu'**il comporte des moyens (46, 48) pour injecter du gaz dans ladite chambre annulaire (38).

6. Dispositif selon la revendication 5, comportant des moyens (46) pour injecter du gaz dans la chambre de thermoformage (26), **caractérisé en ce que** lesdits moyens pour injecter du gaz dans la chambre annulaire (38) comprennent une communication (48) entre la chambre de thermoformage et la chambre annulaire.

7. Dispositif selon la revendication 5 ou 6, **caractérisé en ce qu'**il comprend des moyens (j, 50) pour évacuer l'air de la chambre annulaire (38) lors du déplacement de l'outil de rabat (36, 136) servant à repousser ladite partie (Z2) de la pièce thermoplastique (10).

8. Dispositif selon l'une quelconque des revendications 2 à 7, **caractérisé en ce que** les moyens spécifiques (42) pour déplacer l'outil de rabat (36, 136) sont différents des moyens qui déplacent le piston par rapport au contre-moule.

9. Dispositif selon l'une quelconque des revendications 1 à 8, **caractérisé en ce que** les moyens spécifiques pour déplacer l'outil de rabat comprennent au moins un ensemble de déplacement (42) ayant une base fixe (42A) par rapport au contre-moule (24) et une partie mobile (42B) déplaçable par rapport à cette base.

10. Dispositif selon l'une quelconque des revendications 1 à 9, **caractérisé en ce que** les moyens spécifiques pour déplacer l'outil de rabat comprennent au moins un vérin (42).

11. Dispositif selon l'une quelconque des revendications 1 à 10, **caractérisé en ce qu'**il comprend une pluralité de chambres de thermoformage (26) et une pluralité de pistons de thermoformage (34) aptes, chacun, à pénétrer dans l'une de ces chambres et **en ce qu'**il comprend, pour chaque chambre (26), un outil de rabat (36) formé par une pièce annulaire disposée autour de la chambre considérée.

12. Dispositif selon l'une quelconque des revendications 1 à 10, **caractérisé en ce qu'**il comprend une pluralité de chambres de thermoformage (26) et une pluralité de pistons de thermoformage (34) aptes, chacun, à pénétrer dans l'une de ces chambres et **en ce qu'**il comprend au moins une plaque de rabat (136) ayant une pluralité d'alvéoles (137), l'outil de rabat étant, pour chaque chambre (26), formé par une région de ladite plaque bordant une alvéole (137).

13. Dispositif selon l'une quelconque des revendications 1 à 12, **caractérisé en ce qu'**il comporte des moyens (30, 32, 26') pour disposer une banderole de décor dans la chambre de thermoformage (26) avant le thermoformage du corps (1A) de l'objet (1).

14. Dispositif selon l'une quelconque des revendications 1 à 13, **caractérisé en ce que** l'espace annulaire (38) présente, du côté de la chambre de thermoformage (26), une paroi ayant un relief (39), avantageusement annulaire, pour former un relief (1D) sur le rebord tombant (1C).

15. Procédé de thermoformage d'un objet (1) présentant un corps (1A) et un rebord tombant (1C) formant jupe, dans lequel on thermoforme le corps (1A) de l'objet à partir d'une pièce thermoplastique (10) maintenue entre un moule de thermoformage (22) et un contre-moule (24) en faisant pénétrer un piston de thermoformage (34) dans une chambre de thermoformage (26) du moule (22), par une extrémité (26A) de cette dernière et pour former le rebord tombant (1C), on repousse une partie (Z2) de la pièce thermoplastique (10) dans un espace annulaire (38) ménagé autour de ladite extrémité (26A) de la chambre de thermoformage (26), en déplaçant un outil de rabat (36, 136),
**caractérisé en ce que**, pour former le rebord tombant (1C) on déplace l'outil de rabat (36, 136) par rapport au contre-moule et pendant le déplacement du piston de thermoformage (34) dans le sens de la pénétration de ce piston dans la chambre de thermoformage (26).

16. Procédé selon la revendication 15, **caractérisé en ce qu'**on commence à déplacer l'outil de rabat (36, 136) pour repousser ladite partie (Z2) alors que le piston a déjà commencé sa course de pénétration à l'intérieur de la chambre de thermoformage.

17. Procédé selon la revendication 15 ou 16, **caractérisé en ce que**, pour former le rebord tombant (1C), on ferme au moins sensiblement ledit espace annulaire en constituant une chambre annulaire (38), dans laquelle on injecte du gaz.

18. Procédé selon la revendication 17, **caractérisé en ce qu'**on injecte du gaz dans l'espace annulaire (38) par une communication (48) entre la chambre de thermoformage (26) et la chambre annulaire (38).

19. Procédé selon l'une quelconque des revendications 15 à 18, **caractérisé en ce qu'**on dispose une banderole de décor dans la chambre de thermoformage (26) avant le thermoformage du corps (1A) de l'objet.

20. Procédé selon l'une quelconque des revendications 15 à 19, **caractérisé en ce qu'**on forme un relief (1D) avantageusement annulaire sur le rebord tombant (1C).

## Patentansprüche

1. Vorrichtung für das Thermoformen eines Gegenstands (1), der einen Körper (1 A) und einen eine Schürze bildenden, nach unten weisenden Rand (1 C) aufweist, wobei die Vorrichtung eine Thermoformstation (16) umfasst, die eine Form zum Thermoformen (22) mit wenigstens einer Thermoformkammer (26) sowie eine Gegenform (24) mit wenigstens einem Thermoformkolben (34) umfasst, der geeignet ist, in die Kammer über ein Ende dieser einzudringen, um den Körper des Gegenstands aus einem thermoplastischen Teil (10), das zwischen der Form und der Gegenform gehalten wird, zu thermoformen, wobei die Vorrichtung zur Bildung des nach unten weisenden Rands (1 C) ein Klappwerkzeug (36, 136) umfasst, das geeignet ist, in einen um das Ende (26A) der Thermoformkammer (26) herum ausgebildeten ringförmigen Raum (38), unter Treiben eines Teils (Z2) des thermoplastischen Teils (10) in den ringförmigen Raum, einzudringen,
**dadurch gekennzeichnet, dass** sie spezifische Mittel umfasst, um das Klappwerkzeug (36, 136) gegenüber der Gegenform derart zu bewegen, dass sich das Werkzeug während der Bewegung des Thermoformkolbens (34) in der Richtung seines Eindringens in die Thermoformkammer (26) in der Richtung seines Eindringens in den ringförmigen Raum bewegt.

2. Vorrichtung nach Anspruch 1, **dadurch gekennzeichnet, dass** die spezifischen Mittel geeignet sind, das Bewegen des Klappwerkzeugs (36, 136) in der Richtung seines Eindringens in den ringförmigen Raum zu beginnen, während der Thermoformkolben (34) seinen Hub des Eindringens in die Thermoformkammer bereits begonnen hat.

3. Vorrichtung nach Anspruch 1 oder 2, **dadurch gekennzeichnet, dass** das Ende (26A) der Thermoformkammer (26) einen Rand, der eine Innenlippe (27A) bildet, aufweist, gegenüber der sich eine Innenlippe (25A), welche die Gegenform (24) aufweist, befindet, wobei die Innenlippen (25A) geeignet sind, das thermoplastische Teil zwischen sich einzuklemmen.

4. Vorrichtung nach einem der Ansprüche 1 bis 3, **dadurch gekennzeichnet, dass** der ringförmige Raum (38) durch eine Außenlippe (27B) begrenzt ist, gegenüber der sich eine Außenlippe (25B), welche die Gegenform (24) aufweist, befindet, wobei die Außenlippen geeignet sind, das thermoplastische Teil zwischen sich einzuklemmen.

5. Vorrichtung nach einem der Ansprüche 1 bis 4, **dadurch gekennzeichnet, dass** zur Bildung des nach unten weisenden Rands (1 C) die Form (22) und die Gegenform (24) geeignet sind, auf beiden Seiten des thermoplastischen Teils (10) einander genähert zu werden, um unter Bildung einer ringförmigen Kammer (38) den ringförmigen Raum (38) wenigstens im Wesentlichen zu verschließen, und dass sie Mittel (46, 48) umfasst, um Gas in die ringförmige Kammer (38) einzuleiten.

6. Vorrichtung nach Anspruch 5, umfassend Mittel (46) zum Einleiten von Gas in die Thermoformkammer (26), **dadurch gekennzeichnet, dass** die Mittel zum Einleiten von Gas in die ringförmige Kammer (38) eine Verbindung (48) zwischen der Thermoformkammer und der ringförmigen Kammer umfassen.

7. Vorrichtung nach Anspruch 5 oder 6, **dadurch gekennzeichnet, dass** sie Mittel (j, 50) umfasst, um bei Bewegen des Klappwerkzeugs (36, 136), das dazu dient, den Teil (Z2) des thermoplastischen Teils (10) zu treiben, die Luft aus der ringförmigen Kammer (38) abzuführen.

8. Vorrichtung nach einem der Ansprüche 2 bis 7, **dadurch gekennzeichnet, dass** die spezifischen Mittel (42) zum Bewegen des Klappwerkzeugs (36, 136) von den Mitteln, die den Kolben gegenüber der Gegenform bewegen, verschieden sind.

9. Vorrichtung nach einem der Ansprüche 1 bis 8, **dadurch gekennzeichnet, dass** die spezifischen Mittel zum Bewegen des Klappwerkzeugs wenigstens eine Bewegungsanordnung (42) umfassen, die eine feste Basis (42A) gegenüber der Gegenform (24) und einen beweglichen Teil (42B), der gegenüber dieser Basis beweglich ist, aufweist.

10. Vorrichtung nach einem der Ansprüche 1 bis 9, **dadurch gekennzeichnet, dass** die spezifischen Mittel zum Bewegen des Klappwerkzeugs wenigstens einen Zylinder (42) umfassen.

11. Vorrichtung nach einem der Ansprüche 1 bis 10, **dadurch gekennzeichnet, dass** sie eine Vielzahl von Thermoformkammern (26) und eine Vielzahl von Thermoformkolben (34), die jeweils geeignet sind, in eine dieser Kammern einzudringen, umfasst, und dass sie für jede Kammer (26) ein Klappwerkzeug (36) umfasst, das durch ein um die betrachtete Kammer herum angeordnetes ringförmiges Teil gebildet ist.

12. Vorrichtung nach einem der Ansprüche 1 bis 10, **dadurch gekennzeichnet, dass** sie eine Vielzahl von Thermoformkammern (26) und eine Vielzahl von Thermoformkolben (34), die jeweils geeignet sind, in eine dieser Kammern einzudringen, umfasst, und dass sie wenigstens eine Klappplatte (136) mit einer Vielzahl von Zellen (137) umfasst, wobei das Klappwerkzeug für jede Kammer (26) durch einen eine Zelle (137) umrandenden Bereich der Platte gebildet ist.

13. Vorrichtung nach einem der Ansprüche 1 bis 12, **dadurch gekennzeichnet, dass** sie Mittel (30, 32, 26') umfasst, um eine Zierbanderole in der Thermoformkammer (26) vor dem Thermoformen des Körpers (1 A) des Gegenstands (1) anzuordnen.

14. Vorrichtung nach einem der Ansprüche 1 bis 13, **dadurch gekennzeichnet, dass** der ringförmige Raum (38) auf der Seite der Thermoformkammer (26) eine Wand mit einem Relief (39), vorteilhafterweise ringförmig, aufweist, um ein Relief (1 D) an dem nach unten weisenden Rand (1C) zu bilden.

15. Verfahren zum Thermoformen eines Gegenstands (1), der einen Körper (1 A) und einen eine Schürze bildenden, nach unten weisenden Rand (1 C) aufweist, wobei der Körper (1A) des Gegenstands aus einem thermoplastischen Teil (10), welches zwischen einer Form zum Thermoformen (22) und einer Gegenform (24) gehalten wird, thermogeformt wird, indem man einen Thermoformkolben (34) in eine Thermoformkammer (26) der Form (22) über ein Ende (26A) dieser letzteren eindringen lässt, und zur Bildung des nach unten weisenden Rands (1 C) ein Teil (Z2) des thermoplastischen Teils (10), durch Bewegen eines Klappwerkzeugs (36,136), in einen um das Ende (26A) der Thermoformkammer (26) herum ausgebildeten ringförmigen Raum (38) getrieben wird,
**dadurch gekennzeichnet, dass** zur Bildung des nach unten weisenden Rands (1C) das Klappwerkezug (36, 136) gegenüber der Gegenform und während der Bewegung des Thermoformkolbens (34) in der Richtung des Eindringens dieses Kolbens in die Thermoformkammer (26) bewegt wird.

16. Verfahren nach Anspruch 15, **dadurch gekennzeichnet, dass** begonnen wird, das Klappwerkzeug (36, 136) zu bewegen, um den Teil (Z2) zu treiben, während der Kolben seinen Hub des Eindringens in die Thermoformkammer bereits begonnen hat.

17. Verfahren nach Anspruch 15 oder 16, **dadurch gekennzeichnet, dass** zur Bildung des nach unten weisenden Rands (1C) der ringförmige Raum unter Bildung einer ringförmigen Kammer (38), in die Gas eingeleitet wird, wenigstens im Wesentlichen verschlossen wird.

18. Verfahren nach Anspruch 17, **dadurch gekennzeichnet, dass** Gas in den ringförmigen Raum (38) über eine Verbindung (48) zwischen der Thermoformkammer (26) und der ringförmigen Kammer (38) eingeleitet wird.

19. Verfahren nach einem der Ansprüche 15 bis 18, **dadurch gekennzeichnet, dass** eine Zierbanderole in der Thermoformkammer (26) vor dem Thermoformen des Körpers (1 A) des Gegenstands angeordnet wird.

20. Verfahren nach einem der Ansprüche 15 bis 19, **dadurch gekennzeichnet, dass** an dem nach unten weisenden Rand (1 C) ein vorteilhafterweise ringförmiges Relief (1D) gebildet wird.

## Claims

1. A device for thermoforming an article (1) presenting a body (1A) and a dropped rim (1C) forming a skirt, the device comprising a thermoforming station (16) that comprises a thermoforming mold (22) having at least one thermoforming chamber (26) and a counter-mold (24) having at least one thermoforming piston (34) suitable for penetrating into said chamber via one end thereof in order to thermoform the body of the article from a piece of thermoplastic material (10) held between the mold and the counter-mold, the device including, for the purpose of forming the dropped rim (1C), a rim-making tool (36, 136) suitable for penetrating into an annular space (38) arranged around said end (26A) of the thermoforming chamber (26) while pushing a portion (Z2) of the piece of thermoplastic material (10) into said annular space, the device being **characterized in that** it includes specific means for moving the rim-making tool (36, 136) relative to the counter-mold, such that said tool moves in the direction for penetrating into the annular space while the thermoforming piston (34) is moving in the direction for penetrating into the thermoforming chamber (26).

2. A device according to claim 1, **characterized in that** said specific means are suitable for beginning to move the rim-making tool (36, 136) in the direction for penetrating into the annular space once the thermoforming piston (34) has already begun its penetration stroke inside the thermoforming chamber.

3. A device according to claim 1 or claim 2, **characterized in that** the end (26A) of the thermoforming chamber (26) presents an edge forming an inside lip (27A) facing an inside lip (25A) of the counter-mold (24), said inside lips (25A) being suitable for pinching the piece of thermoplastic material between them.

4. A device according to any one of claims 1 to 3, **characterized in that** the annular space (38) is defined by an outside lip (27B) facing an outside lip (25B) of the counter-mold (24), said outside lips being suitable for pinching the piece of thermoplastic material between them.

5. A device according to any one of claims 1 to 4, **characterized in that**, in order to form the dropped rim (1C), the mold (22) and the counter-mold (24) are suitable for being moved towards each other on opposite sides of the piece of thermoplastic material (10) in such a manner as to at least substantially close said annular space (38) by constituting an annular chamber (38), and **in that** it includes means (46, 48) for injecting gas into said annular chamber (38).

6. A device according to claim 5, including means (46) for injecting gas into the thermoforming chamber (26), the device being **characterized in that** said means for injecting gas into the annular chamber (38) comprise communication (48) between the thermoforming chamber and the annular chamber.

7. A device according to claim 5 or claim 6, **characterized in that** it includes means (j, 50) for evacuating air from the annular chamber (38) during the movement of the rim-making tool (36, 136) for pushing said portion (Z2) of the piece of thermoplastic material (10).

8. A device according to any one of claims 2 to 7, **characterized in that** the specific means (42) for moving the rim-making tool (36, 136) are different from the means that move the piston relative to the counter-mold.

9. A device according to any one of claims 1 to 8, **characterized in that** the specific means for moving the rim-making tool comprise at least one movement assembly (42) having a base (42A) that is stationary relative to the counter-mold (24) and a movable portion (42B) that is movable relative to said base.

10. A device according to any one of claims 1 to 9, **characterized in that** the specific means for moving said rim-making tool comprise at least one jack (42).

11. A device according to any one of claims 1 to 10, **characterized in that** it includes a plurality of thermoforming chambers (26) and a plurality of thermoforming pistons (34), each suitable for penetrating into a respective one of the chambers, and **in that** for each chamber (26) it includes a rim-making tool (36) formed by an annular part arranged around the chamber in question.

12. A device according to any one of claims 1 to 10, **characterized in that** it includes a plurality of thermoforming chambers (26) and a plurality of thermoforming pistons (34), each suitable for penetrating into a respective one of the chambers, and **in that** it includes at least one rim-making plate (136) having a plurality of openings (137), the rim-making tool being formed for each chamber (26) by a region of said plate bordering an opening (137).

13. A device according to any one of claims 1 to 12, **characterized in that** it includes means (30, 32, 26') for placing a decorative strip in the thermoforming chamber (26) prior to thermoforming the body (1A) of the article (1).

14. A device according to any one of claims 1 to 13, **characterized in that** the annular space (38) presents, beside the thermoforming chamber (26), a wall having an advantageously annular portion in relief (39) for forming a portion in relief (1D) on the dropped rim (1C).

15. A method of thermoforming an article (1) presenting a body (1A) and a dropped rim (1C) forming a skirt, wherein the body (1A) of the article is formed from a piece of thermoplastic material (10) held between a thermoforming mold (22) and a counter-mold (24) by causing a thermoforming piston (34) to penetrate into a thermoforming chamber (26) of the mold (22) via one end (26A) thereof, and in order to form the dropped rim (1C), a portion (Z2) of the piece of thermoplastic material (10) is pushed into an annular space (38) arranged around said end (26A) of the thermoforming chamber (26) by moving a rim-making tool (36, 136), the method being **characterized in that**, in order to form the dropped rim (1C), the rim-making tool (36, 136) is moved relative to the counter-mold during the movement of the thermoforming piston (34) in the direction for causing the piston to penetrate into the thermoforming chamber (26).

16. A method according to claim 15, **characterized in that** the rim-making tool (36, 136) begins to be moved for pushing said portion (Z2) after the piston has already begun its stroke of penetrating into the inside of the thermoforming chamber.

17. A method according to claim 15 or claim 16, **characterized in that**, in order to form the dropped rim (1C), said annular space is at least substantially closed by constituting an annular chamber (38) into which gas is injected.

18. A method according to claim 17, **characterized in that** gas is injected into the annular space (38) via communication (48) between the thermoforming chamber (26) and the annular chamber (38).

19. A method according to any one of claims 15 to 18, **characterized in that** a decorative strip is placed in the thermoforming chamber (26) before thermoforming the body (1A) of the article.

20. A method according to any one of claims 15 to 19, **characterized in that** an advantageously annular portion in relief (1D) is formed on the dropped rim (1C).
